(19)

Europäisches
Patentamt
European
Patent Office
Office européen
des brevets

(11) **EP 2 083 971 B1**

(12) **EUROPEAN PATENT SPECIFICATION**

(45) Date of publication and mention
of the grant of the patent:
**21.12.2011  Bulletin 2011/51**

(21) Application number: **07708566.0**

(22) Date of filing: **23.01.2007**

(51) Int Cl.:
**B25J 9/10** $^{(2006.01)}$    **G05D 1/02** $^{(2006.01)}$

(86) International application number:
**PCT/KR2007/000385**

(87) International publication number:
**WO 2008/038865 (03.04.2008 Gazette 2008/14)**

(54) **AUTONOMOUS MOBILE ROBOT CAPABLE OF DETOURING OBSTACLE AND METHOD THEREOF**

AUTONOMER MOBILER ROBOTER, DER HINDERNISSE UMGEHEN KANN, UND VERFAHREN DAFÜR

ROBOT MOBILE AUTONOME CAPABLE DE CONTOURNER UN OBSTACLE ET PROCÉDÉ CORRESPONDANT

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.09.2006  KR 20060095050**

(43) Date of publication of application:
**05.08.2009  Bulletin 2009/32**

(73) Proprietor: **Electronics and Telecommunications Research Institute**
**Yuseong-gu, Daejeon 305-350 (KR)**

(72) Inventors:
 • **NA, Sang-Ik**
  **Daejeon 305-804 (KR)**
 • **YU, Won-Pil**
  **Ulsan 680-010 (KR)**
 • **LEE, Yu-Cheol**
  **Incheon 405-280 (KR)**
 • **DO, Nak-Ju**
  **Daejeon 305-805 (KR)**

(74) Representative: **Betten & Resch**
**Patentanwälte**
**Theatinerstrasse 8**
**80333 München (DE)**

(56) References cited:
**EP-A1- 0 847 958     JP-A- 06 144 247**
**JP-A- 61 245 213     JP-A- 2003 029 842**
**US-A1- 2006 106 496**

## Description

## Technical Field

The present invention relates to a method of controlling a movement of an autonomous mobile robot, and more particularly to an autonomous mobile robot detouring an obstacle existing in a moving direction of the autonomous mobile robot when moving by being led by a moving object connected thereto, and a method of detouring an obstacle using the same.

## Background Art

Recently, an autonomous mobile robot have been developed to be able to cope with an unknown environment without previous knowledge. This autonomous mobile robot is used in various fields. For example, the autonomous mobile robot is used to help the handicapped, convey products in a factory, perform space exploration, substitute human labor in a dangerous environment such as a nuclear waste dump site and the deep sea. Also, the autonomous mobile robot may be used as an automatic robot cleaner or an automatic lawn mower.

The autonomous mobile robot having various functions are expected to provide comfortable living environments to individuals and also provide a higher-value added market based on industrialization of various fields to enterprises.

There are some devices that can move the autonomous mobile robot to a location desired by a user. However, those devices are disadvantageous in that a user must check movements of the autonomous mobile robot with the naked eye. The autonomous mobile robot may be damaged or cause damage to external objects by collision with an obstacle. Such an autonomous mobile robot may collide with the user, causing physical injuries to the user. To address those problems, the user must handle the autonomous mobile robot with greater care and pay attention to the movements of the autonomous mobile robot all the time. Also, disadvantageously, operating the autonomous mobile robot at a desired speed in a desired direction demands a high degree of handling techniques.

To allow a user to easily move a mobile system to a desired destination, a method of controlling the mobile system at a speed corresponding to an extent, direction and length that an attached connection unit is pulled has been proposed. In this method, the direction that the connection unit is pulled is measured, and thus moving of the mobile system can be controlled in a direction corresponding to the measured direction.

Accordingly, the user can easily control the movement of the mobile system simply by pulling the connection unit of a naviguide attached to the mobile system. This method is advantageous in that the user can easily control the mobile system as if he/she guides a movement of a dog using a leash.

However, in this method, the connection unit may have a long length since the mobile system is controlled by measuring a length and direction that the attached connection unit is pulled. For this reason, the present device does not provide a structure that allows the mobile system to follow a route of the user who is moving detouring an obstacle, but provides a structure where the length and direction that the user pulls the connection unit at a current location are measured and the mobile system is moved in the measured direction at the measured speed.

Thus, even though the user detours an obstacle, the mobile system following the user may encounter the obstacle. Since the mobile system (i.e., autonomous mobile robot) moves on the basis of a command to move to a current location of the user, not a command to detour the obstacle, the risk of collision with the obstacle increases. For this reason, when the autonomous mobile robot is operated in an environment where an obstacle exists, the user must experience inconveniences of pulling and manipulating the connection unit attached to the autonomous mobile robot such that the autonomous mobile robot can detour the obstacle.

To address the problem of inconveniency, a method of using a distance sensor has been proposed. However, this method also has the following problems. When an obstacle exists in the middle of a path of the autonomous mobile robot, the autonomous mobile robot must determine which direction the autonomous mobile robot rotates in to detour the obstacle. Also, since the autonomous mobile robot cannot detect the size and location of the obstacle detected by the distance sensor, it is impossible for the autonomous mobile robot to automatically move along an outer edge of the obstacle to detour the obstacle.

For example, when an obstacle is detected in the path of the autonomous mobile robot, the autonomous mobile robot rotates toward a direction that the obstacle does not exist until the obstacle is no longer detected. Whereafter, when the obstacle is no longer detected by the distance sensor, the autonomous mobile robot moves back toward the initial path, that is, toward the obstacle. Thus, such movement of the autonomous mobile robot repetitively occurs to detour one obstacle, undesirably consuming much time.

Prior art document EP 0847958 A1 discloses a cargo handling path setting method and apparatus for a crane.

A cargo handling path setting method and apparatus determine arbitrary hoisting and lowering speeds of a suspended load and the times required for hoisting and lowering to set hoisting and lowering speed patterns, determine an arbitrary traversing speed of the suspended load and the time required for traversing to set a traversing speed pattern, set the positions and heights of obstacles present around the cargo handling path based on data from stacked load sensors, and further set an arbitrary waiting time for traversing and an arbitrary waiting time for lowering; then conduct a theoretical simulation test based on these set conditions to compute a cargo handling path, and if it is determined that the suspended load passing along the cargo handling path will collide with the obstacles, repeat the procedure of revising the set conditions and conducting a theoretical simulation test again. Thus, an optimum cargo handling path is set by which the suspended load can be carried to a predetermined place in the shortest time required by its simultaneous winding/traversing operation without its collision with the obstacles.

As the crane is not mobile, this document does not provide information which would allow to overcome the above-discussed problems occurring in mobile systems.

As further prior art, reference can be made to JP 61245213 A, to JP 06144247 A and to US 20061106496 A1.

**Disclosure of Invention**

**Technical Problem**

The present invention has been made to solve the foregoing problems of the prior art and it is therefore an aspect of the present invention is to provide an autonomous mobile robot capable of detouring an obstacle existing in a direction that the autonomous mobile robot moves while moving by being led by a moving object connected thereto, and a method of detouring an object using the same.

Another aspect of the invention is to provide an autonomous mobile robot capable of detouring an obstacle that the autonomous mobile robot encounters while moving by being led by a moving object connected thereto through a connection unit such as a naviguide, and a method of detouring an obstacle using the same.

**Technical Solution**

The invention is defined in the independent claims 1 and 5. The dependent claims define advantageous embodiments.

According to an aspect of the invention, the autonomous mobile robot includes an extension unit connected to a moving object and extending in proportion to a pulling force of the moving object; a drive unit moving the autonomous mobile robot toward the moving object corresponding to the pulling force of the object connected to the extension unit; a route information obtaining unit obtaining route information according to an extension length to which the extension unit extends corresponding to the pulling force of the moving object; an obstacle detecting unit detecting presence of an obstacle placed within a predetermined distance in a moving direction of the autonomous mobile robot that is being led by the moving object; and a control unit controlling the drive unit such that the autonomous mobile robot moves along a route based on the route information.

The route information obtaining unit includes: a location calculating unit calculating location information of the moving object connected to the extension unit; and a route calculating unit calculating a route of the drive unit according to the extension length of the extension unit on the basis of the calculated location information of the moving object.

The location calculating unit calculates location information of the moving object using information on the extension length and direction that the extension unit extends corresponding to the pulling force of the moving object. The location calculating unit obtains the information on the extension length and direction of the extension unit using a naviguide.

The obstacle detecting unit detects presence of the obstacle using a distance sensor,

The autonomous mobile robot according an aspect of the present invention further includes a storage unit storing the obtained route information. Thus, the control unit controls a movement of the drive unit on the basis of the route information stored in the storage unit when the obstacle is present.

According to another aspect of the invention for realizing the object, there is provided a method of detouring an obstacle of an autonomous mobile robot. The method includes moving the autonomous mobile robot toward a moving object connected to an extension unit connected to a main body, corresponding to a pulling force of the moving object; obtaining route information according to an extension length to which the extension unit extends corresponding to the pulling force of the moving object; detecting presence of an obstacle placed within a predetermined distance in a moving direction of the autonomous mobile robot that is being led by the moving object; and moving the autonomous mobile robot along a route based on the route information when the obstacle exists.

The step of obtaining the route information includes: calculating location information of the moving object connected to the extension unit; and calculating a route of the autonomous mobile robot corresponding to an extension length of the extension unit on the basis of the calculated location information of the moving object

In the step of calculating the location information, the location information of the moving object is calculated using information on an extension length and direction that the extension unit extends corresponding to the pulling force of the moving object.

In the step of calculating the location information, the information on the extension length and direction of the extension unit is obtained using a naviguide.

In the step of detecting the presence of the obstacle, the presence of the obstacle is detected using a distance sensor.

**Advantageous Effects**

According to preferred embodiments of the invention, a route of the autonomous mobile robot is calculated on the basis of an extension length and direction that the extension unit extends as a moving object connected to an autonomous mobile robot through an extension unit moves. When an obstacle is detected in a direction that the autonomous mobile robot is moving, the movement of the autonomous mobile robot is controlled along the calculated route, thereby preventing collision between the autonomous mobile robot and the obstacle caused by moving time delay between the moving object and the autonomous mobile robot due to the extension unit.

**Brief Description of the Drawings**

FIG. 1 is a block diagram of an autonomous mobile robot capable of detouring an obstacle according to an embodiment of the present invention;

FIG. 2 is a flow chart of a method of detouring an obstacle using an autonomous mobile robot according to an embodiment of the present invention;

FIG. 3 is a view for describing a process of calculating location information of a moving object according to an embodiment of the present invention;

FIG. 4 is a view showing an autonomous mobile robot and a user, a moving object, in a 2D space according to an embodiment of the present invention;

FIG. 5 is a view showing collision between an autonomous mobile robot and an obstacle when a user moves the autonomous mobile robot using a naviguide according to an embodiment of the present invention; and

FIG. 6 is a view for describing a method of detouring an obstacle to avoid collision occurring between the user and the autonomous mobile robot of FIG. 5 because of a moving time delay therebetween.

**Best Mode for Carrying Out the Invention**

Certain embodiments of the present invention will now be described in detail with reference to the accompanying drawings. It is to be noted that like reference numerals refer to like elements in any possible parts. Also, a detailed description of well-known functions and configurations will be omitted as it may obscure the subject matter of the prevent invention.

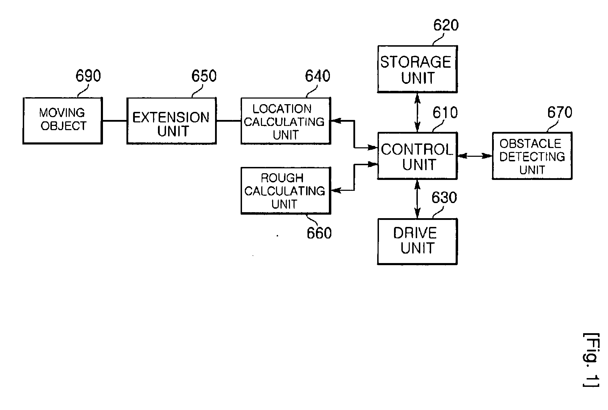

FIG. 1 is a block diagram of an autonomous mobile robot capable of detouring an obstacle according to an embodiment of the present invention.

As shown, the autonomous mobile robot includes a control unit 610, a storage unit 620, a drive unit 630, a location calculating unit 640, an extension unit 650, a route calculating unit 660, and an obstacle detecting unit 770.

The extension unit 650 is connected to a moving object 690, and guides a movement of the autonomous mobile robot. The extension unit 650 in the present embodiment characteristically extends corresponding to a pulling force of the moving object 690. The moving object 690 in the present embodiment is a user.

The control unit 610 controls an overall operation of the autonomous mobile robot. According to an embodiment of the present invention, the control unit 610 controls calculation of a route of the autonomous mobile robot led by the moving object 690, and a direction that the autonomous mobile robot moves when it encounters an obstacle.

The storage unit 620 stores programs necessary for operations of the autonomous mobile robot. According to an embodiment of the present invention, the storage unit 620 stores a program necessary to calculate the route of the autonomous mobile robot and to detect presence of an obstacle.

The drive unit 630 performs operations necessary for traveling of the autonomous mobile robot under control of the control unit 110. According to an embodiment of the present invention, the control unit 610 controls the drive unit 630 such that the autonomous mobile robot moves in a direction corresponding to a direction that the moving object connected to the extension unit 650 moves.

The location calculating unit 640 calculates a location of the moving object 690 on the basis of the length and direction that the extension unit 650 connected to the moving object 690 is pulled. Here, the moving object 690 is a user. Also, the location calculating unit 640 may employ a naviguide to obtain information about the length and direction that the extension unit 650 connected to the moving object 690 is pulled.

The route calculating unit 660 calculates a route of the autonomous mobile robot on the basis of the location information of the moving object 690 calculated by the location calculating unit 640. Here, the control unit 610 stores in the storage unit 620 the calculated route information based on the location information of the moving object 690.

The obstacle detecting unit 670 detects an obstacle placed within a certain distance in a moving direction of the autonomous mobile robot while the autonomous mobile robot is being led by the moving object 690. Here, the obstacle detecting unit 670 detects presence of an obstacle using a distance sensor mounted to the autonomous mobile robot.

Thus, when the obstacle detecting unit 670 detects an obstacle, the control unit 610 controls the drive unit 630 such that the autonomous mobile robot ignores a move command made by pulling of the moving object 690, but travels on the basis of the stored route information.

Accordingly, when the autonomous mobile robot connected to the moving object manipulating a moving direction is moved to a desired location, the autonomous mobile robot does not collide with an obstacle, thereby preventing damage to a device. Also, since the autonomous mobile robot does not collide with a user, the user does not get hurt. Also, since the collision is prevented, the user can easily manipulate the movement of the autonomous mobile robot.

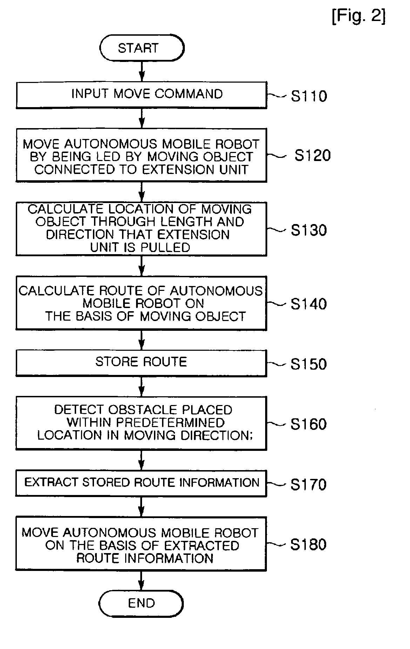

FIG. 2 is a flow chart showing a method of detouring an obstacle using an autonomous mobile robot according to an embodiment of the present invention.

As shown, the control unit 610 inputs, to the drive unit 630, a move command for the autonomous mobile robot made as the moving object 690 pulls the extension unit 650 S 110. Accordingly, the autonomous mobile robot moves by being led by the moving object 690 connected through the extension unit 650 S120.

The control unit 610 controls the location calculating unit 640 to calculate location information of the moving object 690 on the basis of the length and direction that the extension unit 650 extends S130. That is, the location calculating unit 640 obtains information on the length and direction that the extension unit 650 extends using a naviguide, and calculates the location information of the moving object 690 on the basis of the obtained information.

When the location information of the moving object 690 is calculated, the control unit 610 controls the route calculating unit 660 to calculate a route of the autonomous mobile robot on the basis of the location information of the moving object 690 S140. Then, the control unit 610 stores the route information based on the calculated location information of the moving object 690 in the storage unit 620 S150.

The control unit 610 controls the obstacle detecting unit 670 to detect an object placed within a predetermined distance in a moving direction while the autonomous mobile robot is moving by manipulation of the moving object 690 S 160.

When an obstacle is detected by the obstacle detecting unit 670, the control unit 610 extracts the route information of the moving object 690 from the storage unit 620, without following a move command received from the moving object 690 S170. Accordingly, the control unit 610 controls the drive unit 630 to move the autonomous mobile robot on the basis of the extracted route information S 180.

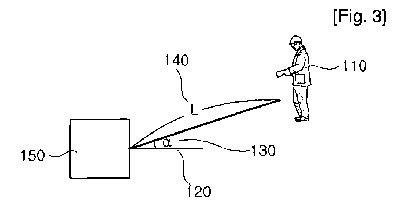

FIG. 3 is a view for describing a process of calculating location information of the moving object according to an embodiment of the present invention.

Here, to calculate the location information of the moving object 690, the location calculating unit 640 employs a naviguide. Since a specific structure and principle of the naviguide have been well known, the detailed description thereof will be omitted. The location calculating unit 640 detects and calculates an extension length (L) 140 and a direction α 130 of a rope (i.e., extension unit 650) pulled by the moving object 690 (user 110 in the drawing) using a provided naviguide 150, and provides information on the calculated length and distance to the control unit 610.

The control unit 610 receives information on the length L and direction α that the extension unit 650 extends, and controls a moving speed and a moving direction of the autonomous robot, using the received data. The controller 610 expresses information on the distance L and direction α with respect to the moving object 110 into 2D spatial coordinates in an environment that the autonomous mobile robot moves.

Referring to FIG. 3, the naviguide 150 of the location calculating unit 640 is set to the origin (0, 0) of the 2D coordinates. Then, the 2D coordinates (x, y) of the user 110 can be easily obtained on the basis of the origin. Since the information on a length L 140 and a direction α 130 of the rope pulled by the user 110 has already been known, the location calculating unit 640 can express the location information of the user 110, which is calculated on the basis of the naviguide 150, as 2D coordinates (Lcos α, L sinα).

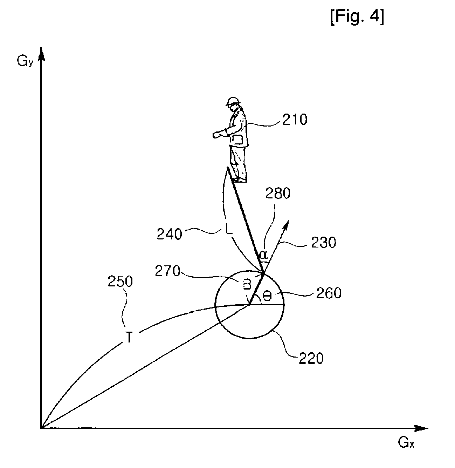

FIG. 4 is a view showing an autonomous mobile robot and a moving object, a user, on a 2D space according to an embodiment of the present invention.

In the drawing, an X axis of an environment where an autonomous mobile robot 220 exists is Gx, and a Y axis is Gy. The absolute coordinates and a heading angle 260 of the autonomous mobile robot 220 moving on a space defined by the Gx axis and the Gy axis may be calculated using a positioning system installed in the space, and the odo-metry information of the autonomous mobile robot 220.

The calculated 2D coordinates of the center of the autonomous mobile robot 220 are (Tx, Ty), and the heading angle is θ 260. In the drawing, a state is illustrated where the rope connected to the naviguide of the location calculating unit 640 is pulled from a position distanced from the center (Tx, Ty) of the autonomous mobile robot 220 at a distance B 270. When the user 210 pulls the rope connected to the naviguide to a length L 270 at an angle α. 280, 2D coordinates (x, y) of the user on the space defined by the Gx axis and the Gy axis may be obtained using Equation 1 below.

[Math Figure 1]

$$\begin{bmatrix} x \\ y \\ 1 \end{bmatrix} = \begin{bmatrix} \cos\theta & -\sin\theta & T_x \\ \sin\theta & \cos\theta & T_y \\ 0 & 0 & 1 \end{bmatrix} \begin{bmatrix} 1 & 0 & B \\ 0 & 1 & 0 \\ 0 & 0 & 1 \end{bmatrix} \begin{bmatrix} \cos\alpha & -\sin\alpha & L\cos\alpha \\ \sin\alpha & \cos\alpha & L\sin\alpha \\ 0 & 0 & 0 \end{bmatrix}$$

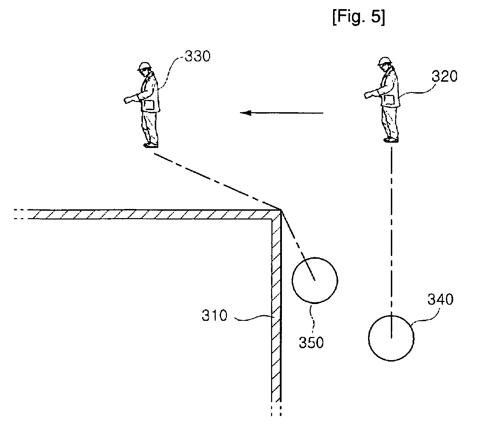

FIG. 5 is an exemplary view showing collision between an autonomous mobile robot and an obstacle when a user moves the autonomous mobile robot using a naviguide according to an embodiment of the present invention.

As shown in FIG. 5, a user 320 moves an autonomous mobile robot 340 by pulling a rope connected to a naviguide of the location calculating unit 640. For this reason, a moving time delay between the user 320 and the autonomous mobile robot 340 occurs corresponding to an extension length of a rope connected to a naviguide.

That is, even though the user has moved avoiding an obstacle, the autonomous mobile robot 350 has not yet detoured the obstacle 310. However, since a move command of the naviguide controls the autonomous mobile robot 350 to move toward a current location of the user 330, collision between the obstacle 310 and the autonomous mobile robot 350 occurs. Therefore, the present invention can serve to address this problem caused by the moving time delay between the autonomous mobile robot 350 and the user 330.

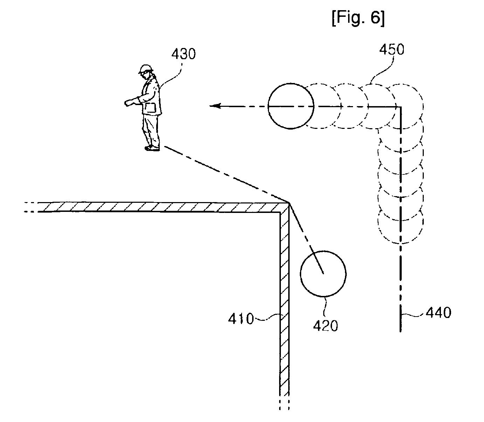

FIG. 6 is a view for describing a method of preventing collision between an obstacle and an autonomous mobile robot, which occurs due to the moving time delay between the user and the autonomous mobile robot of FIG. 5.

Referring to FIG. 6, an embodiment of the present invention proposes a method of preventing collision between an obstacle and an autonomous robot 420 by a movement control command for an autonomous mobile robot 420 to follow a route 440 of a user 430.

When the user 430 moves around an obstacle 410 as illustrated in FIG. 6, the autonomous mobile robot 420 may collide with the obstacle 410. However, according to the present invention, the autonomous mobile robot 420 stores the route 440 of the user 430 while moving. Thus, when a distance sensor detects that collision with the obstacle 410 may occur, the autonomous mobile robot 420 moves on the basis of the stored route information 440, thereby preventing the collision with the obstacle.

While the present invention has been shown and described in connection with the preferred embodiments, it will be apparent to those skilled in the art that modifications and variations can be made without departing from the spirit and scope of the invention as defined by the appended claims.

**Industrial Applicability**

The present invention may be applied to a field of an autonomous mobile robot that can move safely without colliding with an obstacle when following a moving object.

**Claims**

1.  An autonomous mobile robot (420) comprising : an extension unit (650) designed such as to be connected to a moving object (690) and extending in proportion to a pulling force of the moving object (690);
    a drive unit (630) moving the autonomous mobile robot (420) toward the moving object (690) corresponding to the pulling force of the object connected to the extension unit (650);
    a route information obtaining unit obtaining route information according to an extension length to which the extension unit (650) extends corresponding to the pulling force of the moving object (690);
    an obstacle detecting unit (670) detecting presence of an obstacle (410) placed within a predetermined distance in a moving direction of the autonomous mobile robot (420) that is being led by the moving object (690); and
    a control unit (610) controlling the drive unit (630) such that the autonomous mobile robot (420) moves along a route based on the route information,
    wherein the route information obtaining unit comprises:

    a location calculating unit (640) calculating location information of the moving object (690) connected to the extension unit (650); and
    a route calculating unit (660) calculating a route of the drive unit (630) according to the extension length of the extension unit (650) on the basis of the calculated location information of the moving object (690),
    wherein the location calculating unit (640) calculates location information of the moving object (690) using information on the extension length and direction that the extension unit (650) extends corresponding to the pulling force of the moving object (690).

2.  The autonomous mobile robot (420) according to claim 1, wherein the location calculating unit (640) obtains the information on the extension length and direction of the extension unit (650) using a naviguide.

3. The autonomous mobile robot (420) according to claim 1, wherein the obstacle detecting unit (670) detects presence of the obstacle (410) using a distance sensor.

4. The autonomous mobile robot (420) according to claim 1, further comprising a storage unit (620) storing the obtained route information,
wherein the control unit (610) controls a movement of the drive unit (630) on the basis of the route information stored in the storage unit (620) when the obstacle (410) is present.

5. A method of detouring an obstacle (410) of an autonomous mobile robot (420), the method comprising:

moving the autonomous mobile robot (420) toward a moving object (690) connected to an extension unit (650) connected to a main body, corresponding to a pulling force of the moving object (690); obtaining route information according to an extension length to which the extension unit (650) extends corresponding to the pulling force of the moving object (690); detecting presence of an obstacle (410) placed within a predetermined distance in a moving direction of the autonomous mobile robot (420) that is being led by the moving object (690); and moving the autonomous mobile robot (420) along a route based on the route information when the obstacle (410) exists,
wherein the step of obtaining the route information comprises:

calculating location information of the moving object (690) connected to the extension unit (650); and calculating a route of the autonomous mobile robot (420) corresponding to an extension length of the extension unit (650) on the basis of the calculated location information of the moving object (690),
wherein in the step of calculating the location information, the location information of the moving object (690) is calculated using information on an extension length and direction that the extension unit (650) extends corresponding to the pulling force of the moving object (690).

6. The method according to claim 5, wherein in the step of calculating the location information, the information on the extension length and direction of the extension unit (650) is obtained using a naviguide.

7. The method according to claim 5, wherein in the step of detecting the presence of the obstacle (410), the presence of the obstacle (410) is detected using a distance sensor.

**Patentansprüche**

1. Autonomer mobiler Roboter (420), umfassend: eine Verlängerungseinheit (650), die dazu ausgelegt ist, mit einem sich bewegenden Objekt (690) verbunden zu werden, und die sich im Verhältnis zu einer Zugkraft des sich bewegenden Objekts (690) verlängert;
eine Antriebseinheit (630), die den autonomen mobilen Roboter (420) entsprechend der Zugkraft des mit der Verlängerungseinheit (650) verbundenen Objekts in Richtung des sich bewegenden Objekt (690) bewegt;
eine Weginformationsbeschaffungseinheit, die Weginformationen gemäß einer Verlängerungslänge beschafft, bis zu der sich die Verlängerungseinheit (650) entsprechend der Zugkraft des sich bewegenden Objekts (690) verlängert;
eine Hindernisdetektionseinheit (670), die das Vorhandensein eines Hindernisses (410) detektiert, das innerhalb eines vorgegebenen Abstands in einer Bewegungsrichtung des autonomen mobilen Roboters (420) platziert ist, der durch das sich bewegende Objekt (690) geführt wird; und
eine Steuereinheit (610), die die Antriebseinheit (630) so steuert, dass sich der autonome mobile Roboter (420) basierend auf den Weginformationen entlang eines Weges bewegt,
wobei die Weginformationsbeschaffungseinheit umfaßt:

eine Positionsberechnungseinheit (640), die Positionsinformationen des sich bewegenden Objekts (690) berechnet, das mit der Verlängerungseinheit (650) verbunden ist; und
eine Wegberechnungseinheit (660), die einen Weg der Antriebseinheit (630) gemäß der Verlängerungslänge der Verlängerungseinheit (650) auf der Basis der berechneten Positionsinformationen des sich bewegenden Objekts (690) berechnet,
wobei die Positionsberechnungseinheit (640) Positionsinformationen des sich bewegenden Objekts (690) unter Verwendung von Informationen bezüglich der Verlängerungslänge sowie der Richtung berechnet, in die sich die Verlängerungseinheit (650) entsprechend der Zugkraft des sich bewegenden Objekts (690) verlängert.

2. Autonomer mobiler Roboter (420) nach Anspruch 1, wobei die Positionsberechnungseinheit (640) die Informationen bezüglich der Verlängerungslänge sowie der Richtung der Verlängerungseinheit (650) unter Verwendung eines Navi-Guides beschafft.

3. Autonomer mobiler Roboter (420) nach Anspruch 1, wobei die Hindernisdetektionseinheit (670) das Vorhandensein des Hindernisses (410) unter Verwendung eines Abstandssensors detektiert.

4. Autonomer mobiler Roboter (420) nach Anspruch 1, ferner umfassend eine Speichereinheit (620), die die beschafften Weginformationen speichert,
wobei die Steuereinheit (610) eine Bewegung der Antriebseinheit (630) auf der Basis der in der Speichereinheit (620) gespeicherten Weginformationen steuert, wenn das Hindernis (410) vorhanden ist.

5. Verfahren zum Umgehen eines Hindernisses (410) für einen autonomen mobilen Roboter (420), wobei das Verfahren umfaßt:

Bewegen des autonomen mobilen Roboters (420) in Richtung eines sich bewegenden Objekts (690), das mit einer Verlängerungseinheit (650) verbunden ist, die mit einem Hauptkörper verbunden ist, entsprechend einer Zugkraft des sich bewegenden Objekts (690); Beschaffen von Weginformationen gemäß einer Verlängerungslänge, bis zu der sich die Verlängerungseinheit (650) entsprechend der Zugkraft des sich bewegenden Objekts (690) verlängert; Detektieren des Vorhandenseins eines Hindernisses (410), das innerhalb eines vorgegebenen Abstands in einer Bewegungsrichtung des autonomen mobilen Roboters (420) platziert ist, der durch das sich bewegende Objekt (690) geführt wird; und Bewegen des autonomen mobilen Roboters (420) entlang eines Weges basierend auf den Weginformationen, wenn das Hindernis (410) existiert,
wobei der Schritt des Beschaffens der Weginformationen umfaßt:

Berechnen von Positionsinformationen des sich bewegenden Objekts (690), das mit der Verlängerungseinheit (650) verbunden ist; und
Berechnen eines Weges des autonomen mobilen Roboters (420) entsprechend einer Verlängerungslänge der Verlängerungseinheit (650) auf der Basis der berechneten Positionsinformationen des sich bewegenden Objekts (690),
wobei beim Schritt des Berechnens der Positionsinformationen die Positionsinformationen des sich bewegenden Objekts (690) unter Verwendung von Informationen bezüglich einer Verlängerungslänge sowie einer Richtung berechnet werden, in die sich die Verlängerungseinheit (650) entsprechend der Zugkraft des sich bewegenden Objekts (690) verlängert.

6. Verfahren nach Anspruch 5, wobei beim Schritt des Berechnens der Positionsinformationen die Informationen bezüglich der Verlängerungslänge sowie der Richtung der Verlängerungseinheit (650) unter Verwendung eines Navi-Guides beschafft werden.

7. Verfahren nach Anspruch 5, wobei beim Schritt des Detektierens des Vorhandenseins des Hindernisses (410) das Vorhandensein des Hindernisses (410) unter Verwendung eines Abstandssensors detektiert wird.

**Revendications**

1. Robot mobile autonome (420) comprenant : une unité d'extension (650) conçue de façon à être raccordée à un objet en mouvement (690) et s'étendant proportionnellement à une force de traction de l'objet en mouvement (690) ;
une unité d'entraînement (630) déplaçant le robot mobile autonome (420) vers l'objet en mouvement (690) correspondant à la force de traction de l'objet raccordé à l'unité d'extension (650) ;
une unité d'obtention d'informations de trajet obtenant des informations de trajet selon une longueur d'extension à laquelle l'unité d'extension (650) s'étend correspondant à la force de traction de l'objet en mouvement (690) ;
une unité de détection d'obstacle (670) détectant la présence d'un obstacle (410) placé à une distance prédéterminée dans une direction de mouvement du robot mobile autonome (420) qui est dirigé par l'objet en mouvement (690) ; et
une unité de commande (610) commandant l'unité d'entraînement (630) de sorte que le robot mobile autonome (420) se déplace le long d'un trajet d'après les informations de trajet,
dans lequel l'unité d'obtention d'informations de trajet comprend :

une unité de calcul d'emplacement (640) calculant les informations d'emplacement de l'objet en mouvement (690) raccordé à l'unité d'extension (650) ; et

une unité de calcul de trajet (660) calculant un trajet de l'unité d'entraînement (630) selon la longueur d'extension de l'unité d'extension (650) sur la base des informations d'emplacement calculées de l'objet en mouvement (690), où l'unité de calcul d'emplacement (640) calcule les informations d'emplacement de l'objet en mouvement (690) en utilisant les informations sur la longueur et la direction d'extension auxquelles l'unité d'extension (650) s'étend correspondant à la force de traction de l'objet en mouvement (690).

**2.** Robot mobile autonome (420) selon la revendication 1, dans lequel l'unité de calcul d'emplacement (640) obtient les informations sur la longueur et la direction d'extension de l'unité d'extension (650) en utilisant un naviguide.

**3.** Robot mobile autonome (420) selon la revendication 1, dans lequel l'unité de détection d'obstacles (670) détecte la présence de l'obstacle (410) en utilisant un capteur de distance.

**4.** Robot mobile autonome (420) selon la revendication 1, comprenant en outre une unité de stockage (620) stockant les informations de trajet obtenues,

dans lequel l'unité de commande (610) commande un mouvement de l'unité d'entraînement (630) sur la base des informations de trajet stockées dans l'unité de stockage (620) quand l'obstacle (410) est présent.

**5.** Procédé de contournement d'un obstacle (410) d'un robot mobile autonome (420), le procédé comprenant les étapes consistant à :

déplacer le robot mobile autonome (420) vers un objet en mouvement (690) raccordé à une unité d'extension (650) raccordée à un corps principal, correspondant à une force de traction de l'objet en mouvement (690) ; obtenir des informations de trajet selon une longueur d'extension à laquelle l'unité d'extension (650) s'étend correspondant à la force de traction de l'objet en mouvement (690) ; détecter la présence d'un obstacle (410) placé à une distance prédéterminée dans une direction de mouvement du robot mobile autonome (420) qui est dirigé par l'objet en mouvement (690) ; et déplacer le robot mobile autonome (420) le long d'un trajet d'après sur les informations de trajet quand l'obstacle (410) existe,

dans lequel l'étape consistant à obtenir les informations de trajet comprend les sous-étapes consistant à :

calculer les informations d'emplacement de l'objet en mouvement (690) raccordé à l'unité d'extension (650) ; et

calculer un trajet du robot mobile autonome (420) correspondant à une longueur d'extension de l'unité d'extension (650) sur la base des informations d'emplacement calculées de l'objet en mouvement (690), dans lequel dans l'étape consistant à calculer les informations d'emplacement, les informations d'emplacement de l'objet en mouvement (690) sont calculées en utilisant des informations sur une longueur et une direction d'extension auxquelles l'unité d'extension (650) s'étend correspondant à la force de traction de l'objet en mouvement (690).

**6.** Procédé selon la revendication 5, dans lequel l'étape consistant à calculer les informations d'emplacement, les informations sur la longueur et la direction d'extension de l'unité d'extension (650) sont obtenues en utilisant un naviguide.

**7.** Procédé selon la revendication 5, dans lequel dans l'étape consistant à détecter la présence de l'obstacle (410), la présence de l'obstacle (410) est détectée en utilisant un capteur de distance.

[Fig. 1]

690 MOVING OBJECT
650 EXTENSION UNIT
640 LOCATION CALCULATING UNIT
620 STORAGE UNIT
610 CONTROL UNIT
670 OBSTACLE DETECTING UNIT
660 ROUGH CALCULATING UNIT
630 DRIVE UNIT

[Fig. 2]

```
                    ┌─────────────┐
                    │    START    │
                    └──────┬──────┘
                           │
                           ▼
         ┌──────────────────────────────┐
         │      INPUT MOVE COMMAND       │──── S110
         └───────────────┬──────────────┘
                         │
                         ▼
         ┌──────────────────────────────┐
         │  MOVE AUTONOMOUS MOBILE ROBOT │
         │  BY BEING LED BY MOVING OBJECT│──── S120
         │  CONNECTED TO EXTENSION UNIT  │
         └───────────────┬──────────────┘
                         │
                         ▼
         ┌──────────────────────────────┐
         │  CALCULATE LOCATION OF MOVING │
         │   OBJECT THROUGH LENGTH AND   │
         │    DIRECTION THAT EXTENSION   │──── S130
         │         UNIT IS PULLED        │
         └───────────────┬──────────────┘
                         │
                         ▼
         ┌──────────────────────────────┐
         │ CALCULATE ROUTE OF AUTONOMOUS │
         │        MOBILE ROBOT ON        │──── S140
         │    THE BASIS OF MOVING OBJECT │
         └───────────────┬──────────────┘
                         │
                         ▼
         ┌──────────────────────────────┐
         │          STORE ROUTE          │──── S150
         └───────────────┬──────────────┘
                         │
                         ▼
         ┌──────────────────────────────┐
         │     DETECT OBSTACLE PLACED    │
         │      WITHIN PREDETERMINED     │──── S160
         │  LOCATION IN MOVING DIRECTION;│
         └───────────────┬──────────────┘
                         │
                         ▼
         ┌──────────────────────────────┐
         │ EXTRACT STORED ROUTE INFORMATION │──── S170
         └───────────────┬──────────────┘
                         │
                         ▼
         ┌──────────────────────────────┐
         │  MOVE AUTONOMOUS MOBILE ROBOT │
         │   ON THE BASIS OF EXTRACTED   │──── S180
         │        ROUTE INFORMATION      │
         └───────────────┬──────────────┘
                         │
                         ▼
                    ┌─────────────┐
                    │     END     │
                    └─────────────┘
```

[Fig. 3]

[Fig. 4]

[Fig. 5]

[Fig. 6]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0847958 A1
- JP 61245213 A
- JP 06144247 A
- US 20061106496 A1